(19) Europäisches Patentamt / European Patent Office / Office européen des brevets

(11) **EP 4 563 976 A1**

(12) **EUROPEAN PATENT APPLICATION**
published in accordance with Art. 153(4) EPC

(43) Date of publication:
**04.06.2025 Bulletin 2025/23**

(21) Application number: **24764012.1**

(22) Date of filing: **29.02.2024**

(51) International Patent Classification (IPC):
*G01N 21/3518* (2014.01)     *G01N 21/61* (2006.01)

(52) Cooperative Patent Classification (CPC):
**G01N 21/3504; G01N 21/3518; G01N 21/61**

(86) International application number:
**PCT/JP2024/007550**

(87) International publication number:
**WO 2024/181535 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.03.2023 JP 2023031563**

(71) Applicant: **Fuji Electric Co., Ltd.**
**Kawasaki-shi, Kanagawa 210-9530 (JP)**

(72) Inventors:
• **TANIGUCHI Yu**
  **Kawasaki-shi, Kanagawa 210-9530 (JP)**
• **TAKEDA Naoki**
  **Kawasaki-shi, Kanagawa 210-9530 (JP)**

(74) Representative: **Appelt, Christian W.**
**Boehmert & Boehmert**
**Anwaltspartnerschaft mbB**
**Pettenkoferstrasse 22**
**80336 München (DE)**

(54)     **GAS ANALYSIS DEVICE**

(57)     Provided is a gas analyzer (100) capable of simultaneously analyzing a plurality of types of gases. A gas analyzer (100) includes: a light emitting unit (10) configured to emit an infrared light beam; a plurality of gas filters (21a to 21d) configured to transmit a light beam from the light emitting unit (10) and sealed with a plurality of measurement target gases of high purity and one gas that does not absorb infrared light; a gas filter wheel (20) in which the plurality of gas filters (21a to 21d) are stored and which has a rotation mechanism (30); a sample gas cell (40) on which the light beam transmitted through the gas filters (21a to 21d) is incident and through which a gas including the measurement target gases flows; and a light receiving unit (50) configured to receive the infrared light beam transmitted through the sample gas cell (40).

FIG. 1

## Description

Technical Field

The present invention relates to a gas analyzer.

Background Art

A gas analyzer of an infrared absorption type by a gas filter correlation (GFC) or the like is known. Therefore, for example, Patent Literature 1 discloses a measurement device of an infrared absorption type in which an infrared light beam is intermittently incident on a sample cell into which a sample gas is introduced, and a light amount of the infrared light beam transmitted through the sample cell is detected by a detector to calculate a concentration of a measurement target gas in the sample gas.

Citation List

Patent Literature

Patent Literature 1: Japanese Patent No. 4790330

Summary of Invention

Technical Problem

However, although Patent Literature 1 discloses that an output signal is sampled by using a timing signal generated by dividing a measurement cycle by a predetermined number, there is a problem that it is difficult to simultaneously analyze a plurality of types of gases.
An object of the present embodiment is to provide a gas analyzer capable of simultaneously analyzing a plurality of types of gases.

Solution to Problem

A gas analyzer according to one aspect of the present embodiment includes: a light source configured to emit an infrared light beam; a plurality of gas filters configured to transmit a light beam from the light source and sealed with a plurality of measurement target gases of high purity and one gas that does not absorb infrared light; a gas filter wheel in which the plurality of gas filters are stored and which has a rotation mechanism; a sample gas cell on which the light beam transmitted through the gas filter is incident and through which a gas including the measurement target gases flows; and a light receiving unit configured to receive the infrared light beam transmitted through the sample gas cell.

Advantageous Effects of Invention

According to the present invention, a plurality of types of gases can be analyzed simultaneously.

Brief Description of Drawings

Fig. 1 is an overall configuration diagram illustrating an example of a gas analyzer according to the present embodiment.
Fig. 2 is a diagram illustrating an example of an outline of the gas analyzer according to the present embodiment.
Fig. 3 is a block diagram illustrating an example of a device configuration of an electric circuit configuring the gas analyzer.
Fig. 4 is a block diagram illustrating another embodiment of the device configuration of the electric circuit configuring the gas analyzer.
Fig. 5 is a diagram illustrating an example of a digital signal after passing through an AD conversion unit.
Fig. 6 is a diagram illustrating an example of a generated filter signal.
Fig. 7 is a diagram illustrating an example of a generated filter signal.

Description of Embodiments

In general, a gas analyzer measures a gas concentration of a measurement target by applying a light beam having a specific wavelength absorbed by a measurement target gas and measuring an attenuation amount (amplitude ratio of a detection waveform) of the light beam. It is known that an absorption intensity of a gas follows a Beer-Lambert law, and a ratio of a light amount is correlated with the gas concentration.

A gas filter correlation (GFC) is known as a measurement method that is not affected by interference gases or optical noise, excluding electric noise, by alternately detecting a high-concentration measurement target gas and a reference gas (zero gas) and taking a difference.

However, when the gas filter correlation is adopted, a gas filter sealed with a gas and a disk-shaped chopper mechanism (rotating sector) that performs modulation need to be constructed in parallel. Therefore, a size of an entire device tends to increase, and the chopper mechanism needs to function simultaneously with the gas filter. For this reason, when the number of gas types is increased, there arises a problem that a size of a rotating portion is increased. In addition, conventionally, there is a problem that it is difficult to use for detection of two or more types of gases although it is possible to cope with detection of one type of gas (combination of measurement target gas and reference gas).

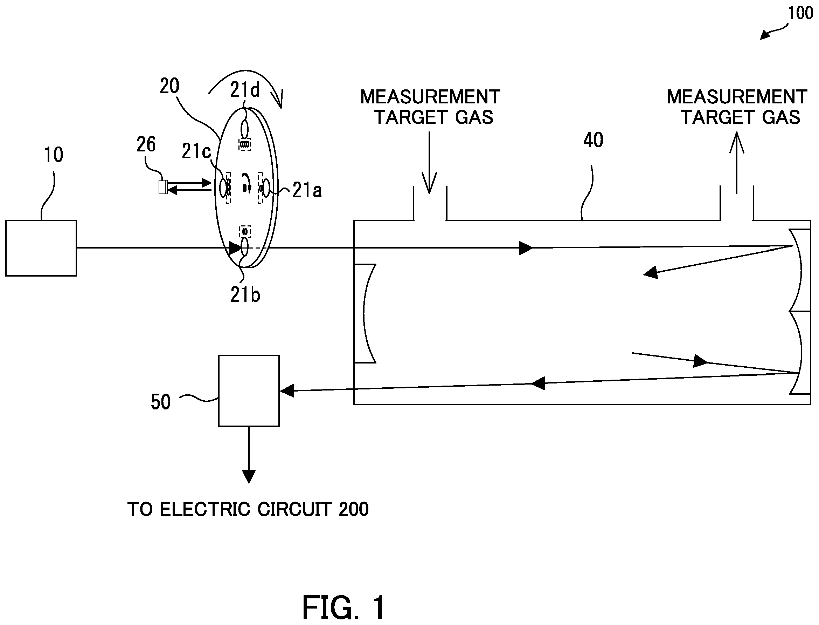

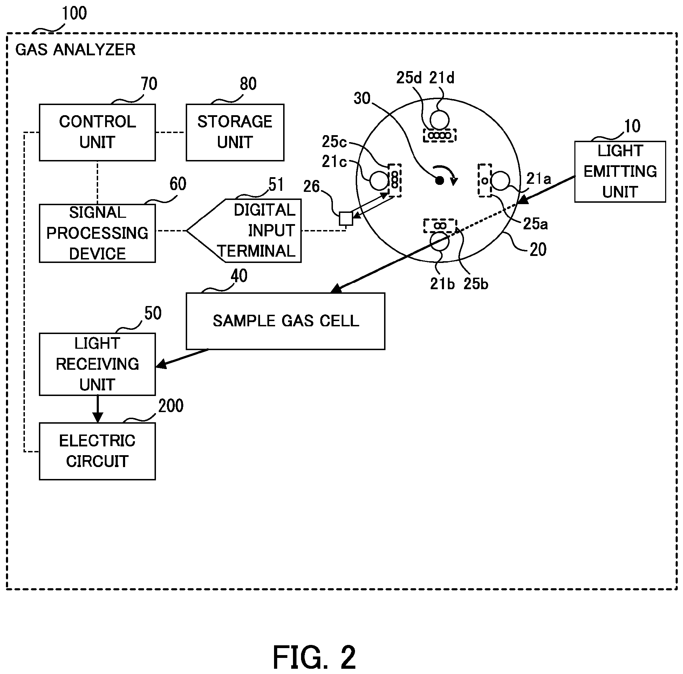

Therefore, in the present embodiment, a configuration of a gas analyzer described below has been conceived. Hereinafter, the present embodiment will be described with reference to the drawings. Fig. 1 is an overall configuration diagram illustrating an example of a gas analyzer 100 according to the present embodiment, and Fig. 2 is a diagram illustrating an example of an outline of the gas analyzer 100 according to the present embodiment.

As illustrated in Figs. 1 and 2, the gas analyzer 100 according to the present embodiment includes a light emitting unit 10, a gas filter wheel 20, a rotation mechanism 30, a sample gas cell 40, a light receiving unit 50, a signal processing device 60, a control unit 70, and an electric circuit 200. The gas analyzer 100 may have another configuration not illustrated in Figs. 1 and 2.

The light emitting unit 10 includes a light source that emits an infrared light beam. For example, as an infrared light source, JSIR350-5-BL-R-D3.6-0-0 (manufactured by MicroHybrid) may be used. Although not illustrated, an infrared light source and an off-axis parabolic mirror may be used in combination in order to make emitted infrared light a light beam close to parallel light. For example, MPD00M9-F01 (focal length: 15 mm, manufactured by Thorlabs) may be used as the off-axis parabolic mirror. Note that a general optical component such as a lens or a parabolic mirror may be used as the means for realizing the light beam close to parallel light.

The gas filter wheel 20 includes a plurality of gas filters 21a to 21d, position detection units 25a to 25d, and a photodetector 26. In the present embodiment, the gas filter wheel 20 stores four gas filters 21a to 21d. Note that the number of gas filters is not limited to four, and at least two or more gas filters can be stored.

The light beam emitted from the light emitting unit 10 is incident on one of the gas filters 21a to 21d. The gas filters 21a to 21d are configured by cells capable of sealing a gas. A zero gas (for example, $N_2$ gas) is sealed in any one of the gas filters 21a to 21d. In the present embodiment, for example, the zero gas (hereinafter, also referred to as "gas type (A)") is sealed in the gas filter 21a. Among the gas filters of the gas filters 21a to 21d, in the gas filters 21b to 21d other than the gas filter 21a in which the zero gas is sealed, a plurality of high purity gases (hereinafter, also referred to as "gas type (B)", "gas type (C)", and "gas type (D)") of measurement target gases (for example, $CO_2$ gas) are sealed. In the present embodiment, for example, the measurement target gases are sealed in the gas filters 21b to 21d. The emitted light beam passes through any one of the gas filters 21a to 21d, so that a part of the light beam is absorbed by the gas component sealed in the gas filters 21a to 21d.

The gas filter wheel 20 has the rotation mechanism 30. The gas filter wheel 20 is rotated in a predetermined direction by driving the rotation mechanism 30. In the present embodiment, the gas filter wheel 20 is rotated clockwise by the rotation mechanism 30 as indicated by an arrow in Fig. 2. The gas filter wheel 20 may be rotated counterclockwise by the rotation mechanism 30. A general motor can be used for the rotation mechanism 30. The motor configuring the rotation mechanism 30 can rotate the gas filter wheel 20 at an arbitrary rotation speed. In the present embodiment, the motor configuring the rotation mechanism 30 can rotate the gas filter wheel 20 at, for example, 1000 to 4000 rpm, and in the present embodiment, can rotate the gas filter wheel 20 at 2000 rpm.

The position detection units 25a to 25d detect positions of the plurality of gas filters 21a to 21d in synchronization with the rotation of the gas filter wheel 20. The position detection units 25a to 25d are disposed in the vicinity of the respective gas filters 21a to 21d. In the present embodiment, the position detection units 25a to 25d are disposed on an inner side of the gas filter wheel 20 in a radial direction with respect to the respective gas filters 21a to 21d. When the gas filter wheel 20 is rotated by the rotation mechanism 30, the position detection units 25a to 25d are detected by the photodetector 26, and a signal synchronized with the position of each of the gas filters 21a to 21d is returned to the photodetector 26 as a gate signal. In the present embodiment, the gate signal is information indicating the position of each of the gas filters 21a to 21d corresponding to the position detection units 25a to 25d detected by the photodetector 26.

In the present embodiment, the position detection units 25a to 25d are provided in the gas filter wheel 20 as holes corresponding to filter numbers of the respective gas filters 21a to 21d.

As illustrated in Fig. 2, the position detection units 25a to 25d of the present embodiment are formed by a different number of holes for each of the gas filters 21a to 21d. For example, the gas filters 21a to 21d are formed by "one hole" to "four holes", respectively. However, the number of holes is not limited to the embodiment illustrated in Figs. 1 and 2, and may be any number as long as each of the gas filters 21a to 21d can be identified.

As the filter number, a number that can uniquely identify each of the gas filters 21a to 21d can be set. For example, filters 1 to 4 can be set as the filter numbers of the gas filters 21a to 21d. Hereinafter, the "gas filters 21a to 21d" may be referred to as the "filters 1 to 4". The filters 1 to 4 are gas filters corresponding to the gas types (A) to (D), respectively.

When the motor configuring the rotation mechanism 30 rotates, the photodetector 26 can obtain information on the positions of the gas filters 21a to 21d based on the gate signals corresponding to the positions of the gas filters 21a to 21d detected by the position detection units 25a to 25d. For example, in the present embodiment, the photodetector 26 obtains position information of the gas filter 21a by obtaining one rising signal when passing through the position detection unit 25a corresponding to the gas filter 21a, and obtains position information of the gas filter 21b by obtaining two rising signals when passing through the position detection unit 25b corresponding to the gas filter 21b.

In the present embodiment, the photodetector 26 obtains the position information corresponding to the position of each of the gas filters 21a to 21d as a signal by a combination of the position detection units 25a to 25d and the photodetector 26, but the present invention is not limited thereto. For example, it is sufficient to have a function of being able to obtain the position information corresponding to the position of each of the gas filters 21a to 21d as a signal. For example, instead of the photodetector 26, the position information may be returned as a signal based on magnetism emitted by the position detection units 25a to 25d by a magnetic detection element (Hall element) (not illustrated). In this case, the position detection units 25a to 25d are formed of magnets that emit different magnetism for each of the gas filters 21a to 21d. The signal obtained by the photodetector 26 is input as a synchronization signal (electric signal) to the signal processing device 60 through a digital input terminal (digital input) 51.

In the sample gas cell 40, a gas including measurement target gases flows as illustrated in Fig. 1. The light beam transmitted through the gas filters 21a to 21d is incident on the sample gas cell 40. Here, as the sample gas cell 40, a multiple reflection cell may be used for the purpose of high sensitivity. The light beam having passed through the sample gas cell 40 is incident on the light receiving unit 50.

The light receiving unit 50 includes a light receiving element (not illustrated). As the light receiving element, an element having sensitivity for both the light source and the measurement target gases can be used, and for example, an InAsSb photovoltaic element (P13243-022MS (manufactured by Hamamatsu Photonics K.K.)) can be used. The light beam transmitted through the gas filters 21a to 21d and the sample gas cell 40 and incident from the light receiving unit 50 is input to the electric circuit 200.

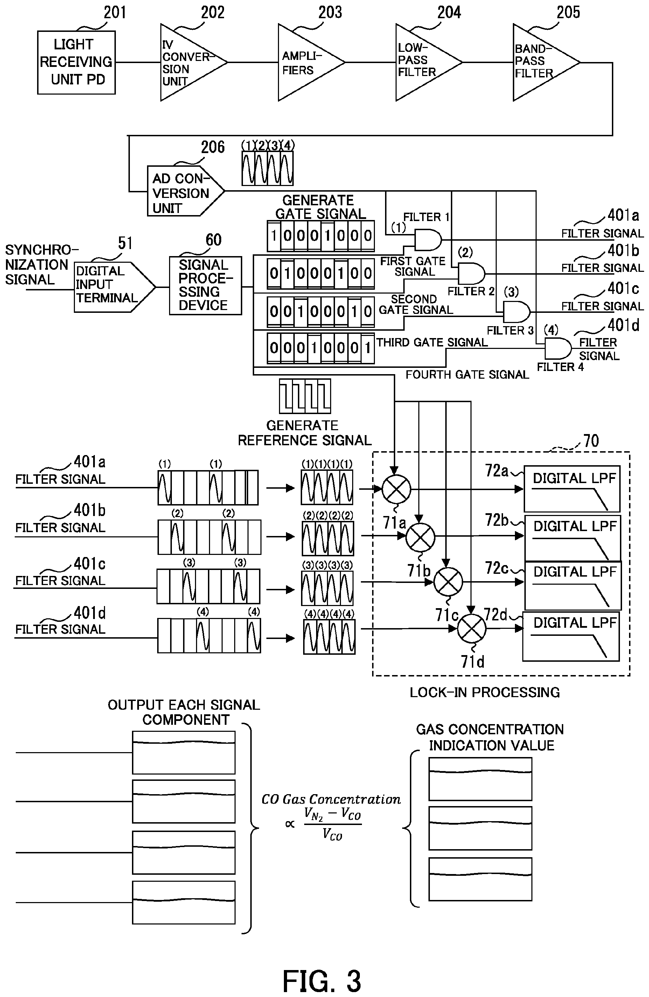

Next, a flow of an electric signal will be described with reference to a block diagram illustrated in Fig. 3. Fig. 3 is a block diagram illustrating an example of a device configuration of the electric circuit 200 configuring the gas analyzer 100.

The electric circuit 200 includes a light receiving unit photodiode (PD) 201, a current/voltage (IV) conversion unit 202, an amplifier circuit (preamplifier circuit) 203, a low-pass filter (LPF) 204, a band-pass filter (BPF) 205, and an AD conversion unit 206.

The light receiving unit PD 201 converts an amount of the transmitted light of the light beam transmitted through the gas filters 21a to 21d and the sample gas cell 40 and incident from the light receiving unit 50 into a current (electric signal), and causes the current to flow into the electric circuit 200. The IV conversion unit 202 converts the current flowing in by the light receiving unit PD 201 into a voltage. The amplifier circuit 203 amplifies an output signal of the converted voltage. In the present embodiment, the amplifier circuit 203 amplifies the output signal, but the present invention is not limited thereto. The amplification of the output signal by the amplifier circuit 203 may be omitted.

The signal generated by the rotation of the motor configuring the rotation mechanism 30 is a signal having a square wave shape (hereinafter, also referred to as a "square wave signal"). Since the square wave signal includes many harmonic components, the low-pass filter 204 removes high frequency noise, and the band-pass filter 205 passes only a necessary frequency band to attenuate other frequencies, thereby removing components other than the frequency corresponding to the rotation of the motor configuring the rotation mechanism 30. As a result, noise included in the signal can be removed, and detection accuracy of the gas concentration can be improved.

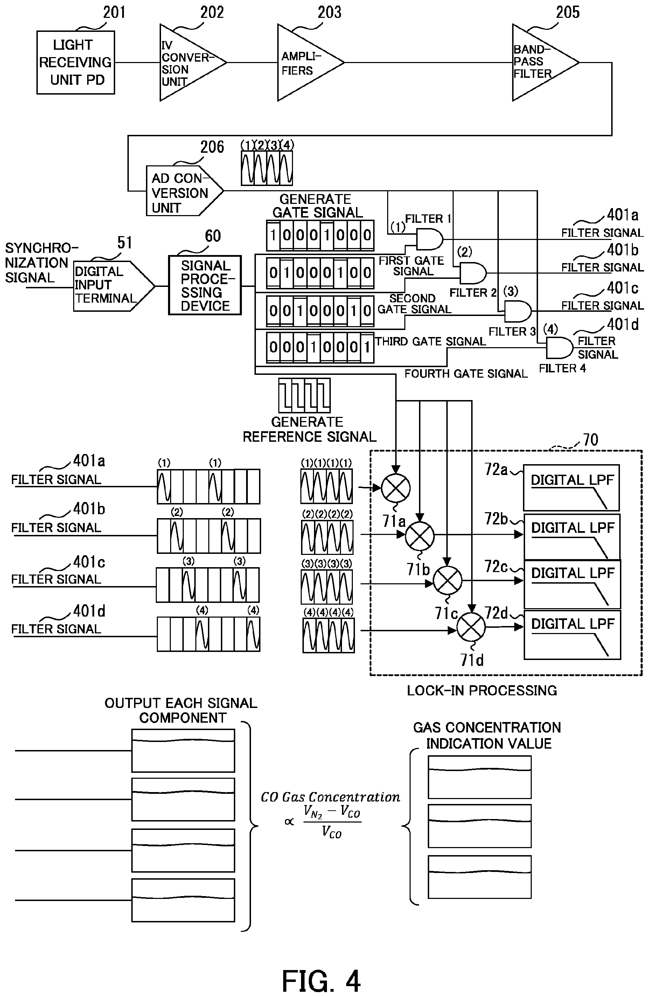

In the present embodiment, the noise included in the signal is removed by the combination of the low-pass filter 204 and the band-pass filter 205, but the present invention is not limited thereto. As another embodiment, as illustrated in Fig. 4, the configuration of the low-pass filter 204 may be omitted, and the noise included in the signal may be removed only by the configuration of the band-pass filter 205. Fig. 4 is a block diagram illustrating another embodiment of the device configuration of the electric circuit 200 configuring the gas analyzer 100. In the electric circuit 200 of the embodiment illustrated in Fig. 4, the configuration of the low-pass filter 204 in the electric circuit 200 illustrated in Fig. 3 is omitted, and noise is removed by the band-pass filter 205. As a result, the device configuration of the electric circuit 200 can be simplified, and the manufacturing cost can be reduced. Note that the band-pass filter 205 may be replaced with a combination of a high-pass filter (not illustrated) and the low-pass filter 204 to remove the noise included in the signal.

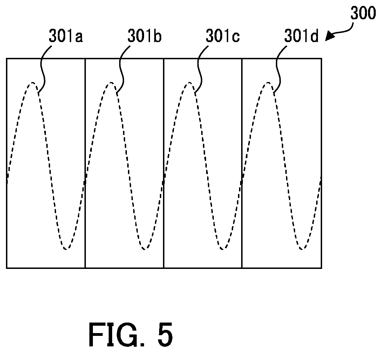

The AD conversion unit 206 digitizes an analog signal from which the noise has been removed by the low-pass filter 204 and the band-pass filter 205, and outputs the digitized signal as a digital signal. Fig. 5 is a diagram illustrating an example of a digital signal after passing through the AD conversion unit 206. As illustrated in Fig. 5, the digital signal after passing through the AD conversion unit 206 is output as a continuous signal 300 including information of all signals 301a to 301d of the gas filters 21a to 21d. In the description of Figs. 3 and 4, the signals 301a to 301d derived from the gas types (A) to (D) corresponding to the gas filters 21a to 21d are illustrated by using (1) to (4), respectively, for convenience.

Next, a behavior of the position information detected by the photodetector 26 will be described. The position information detected by the photodetector 26 is based on the rotation of the gas filter wheel 20. Therefore, when the motor configuring the rotation mechanism 30 rotates, the photodetector 26 can obtain a rising signal corresponding to the position of each of the gas filters 21a to 21d. This signal is input to the signal processing device 60 as a digital signal from the digital input terminal 51. A comparator can be used as the input means.

The signal processing device 60 generates a gate signal indicating the position of each of the gas filters 21a to 21d based on the digitized synchronization signal (electric signal) obtained by the photodetector 26.

The control unit 70 comprehensively controls the entire gas analyzer 100, and includes a central processing unit (CPU) (not illustrated) that reads a program and executes gas concentration calculation processing. A storage unit 80 has a random access memory (RAM), a read only memory (ROM), a hard disk drive (HDD), a solid state drive (SSD), and the like. The storage unit 80 stores the program executed by the control unit 70 and various other data. In addition, the storage unit 80 provides a work area when the control unit 70 executes the program.

In the AD conversion unit 206, signals (1) to (4) of the gas types (A) to (D) corresponding to the gas filters 21a to 21d are sequentially output, and as illustrated in Fig. 5, the digital signal after passing through the AD conversion unit 206 is output in a form of the continuous signal 300, such as a continuous sine wave, including the information of all the signals 301a to 301d of the gas filters 21a to 21d. An amplitude depends on gas absorption, and the signals (1) to (4) of the gas types (A) to (D) have different amplitudes.

The signal processing device 60 generates a reference signal indicating the position of each of the gas filters 21a to 21d based on the digitized synchronization signal (electric signal) obtained by the photodetector 26. The reference signal is a signal used to synchronize the detected positions of the gas filters 21a to 21d with time information of the light beam transmitted through the gas filters 21a to 21d. The synchronization signal generated in synchronization with the output by the gas filters 21a to 21d generates the gate signal and the reference signal from the digital input terminal 51 through the signal processing device 60. In the present embodiment, the gate signal generated by the signal processing device 60 is represented by, for example, an ON or OFF binary number. The gate signal detects a rotational position of each of the filters 1 to 4 based on a signal pattern (one ON or OFF signal for filter 1, two ON or OFF signals for filter 2, three ON or OFF signals for filter 3, and four ON or OFF signals for filter 4) of the synchronization signal, divides one rotation into four by using the synchronization signal of the filter 1 coming after the filter 4 as a trigger signal, and generates a gate signal (1) to be ON during a sine wave of the filter 1, a gate signal (2) to be ON during a sine wave of the filter 2, a gate signal (3) to be ON during a sine wave of the filter 3, and a gate signal (4) to be ON during a sine wave of the filter 4. At this time, since there is a possibility that a delay occurs in the signal due to the influence of the band-pass filter 205, an ON timing of each of the gate signals (1) to (4) needs to be determined in consideration of the delay time of the band-pass filter 205.

As the reference signal, a rectangular wave or a sine wave for four cycles may be digitally generated from the trigger signal as a starting point to the next trigger signal, but it is necessary to adjust the phase in consideration of the influence of the delay by the band-pass filter 205 as described above. The reference signal may be a sine wave or a rectangular wave, but in the case of a rectangular wave, since the reference signal includes a harmonic component of an integral multiple, lock-in processing cannot narrow down the reference signal to a single frequency component. In order to improve a signal-to-noise ratio (SNR), the reference signal is desirably a sine wave. However, in a case where the amplitude of the light reception signal having passed through the amplifier circuit 203 is significantly reduced by the band-pass filter 205, it may be advantageous for improving the SNR to widen the pass band of the band-pass filter 205 to gain the signal amplitude. In that case, lock-in processing in which the reference signal is a rectangular wave is effective. Therefore, in order to perform the lock-in processing, it is necessary to rearrange the continuous signal 300 including all the signals 301a to 301d of the gas filters 21a to 21d into filter signals 401a to 401d for each of the gas filters 21a to 21d.

Therefore, in the lock-in processing, the control unit 70 matches the continuous signal 300 including all the signals 301a to 301d of the gas filters 21a to 21d with the gate signal generated by the signal processing device 60, divides the continuous signal 300 including all the signals 301a to 301d of the gas filters 21a to 21d, and generates the filter signals 401a to 401d for each of the gas filters 21a to 21d. The signal processing device 60 multiplies the gate signal indicating the position of each of the gas filters 21a to 21d (filters 1 to 4) by each of the signals 301a to 301d corresponding to each of the filters 1 to 4 to generate the filter signals 401a to 401d corresponding to each of the gas filters 21a to 21d. Thus, the signal is separated into the filter signals 401a to 401d by taking AND with the gate signals (1) to (4) corresponding to the gas types (A) to (D).

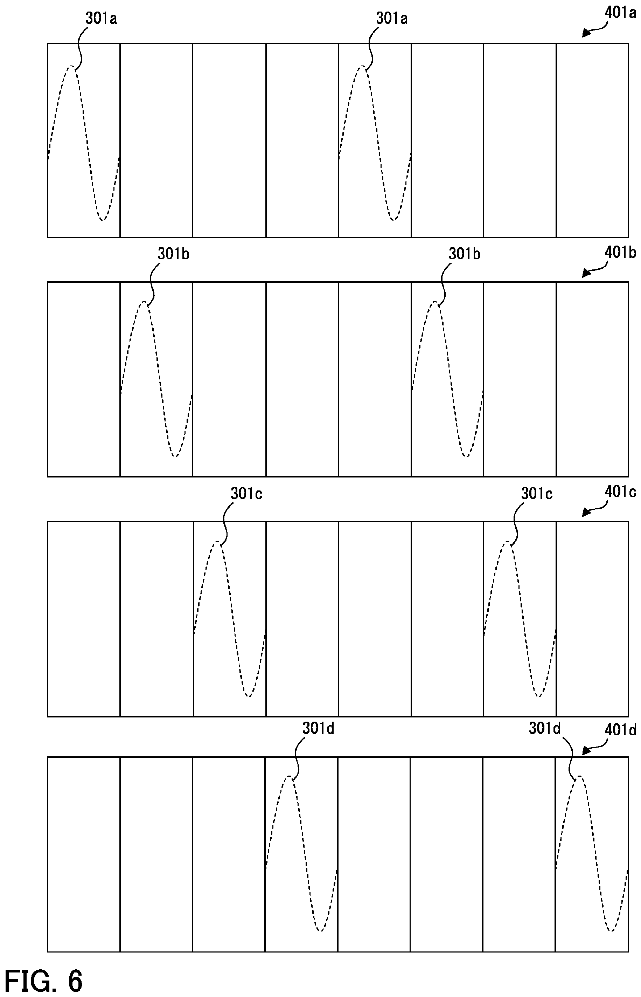

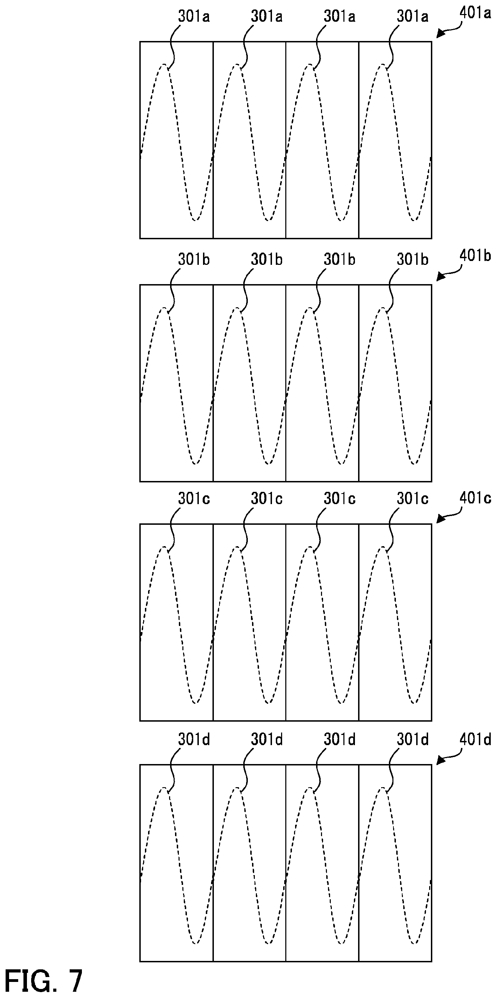

Figs. 6 and 7 are diagrams illustrating examples of the generated filter signals 401a to 401d. As illustrated in Fig. 6, the filter signals 401a to 401d corresponding to the respective gas filters 21a to 21d (filters 1 to 4) are generated by being divided at predetermined timings, and thus are generated as fragmentary sine waves rising at predetermined timings.

Therefore, as illustrated in Fig. 7, the signal processing device 60 generates the generated fragmentary sine waves as the continuous sine wave filter signals 401a to 401d. As a result, sinusoidal signals corresponding to the gas filters 21a to 21d (filters 1 to 4) can be continuously included in the filter signals 401a to 401d. The filter signals 401a to 401d corresponding to the separated gas types (A) to (D) output signals at four signal intervals. Next, signal processing of joining the components, outputting as a continuous signal, and arranging into a continuous signal is performed. The envelope of the output continuous signal is a signal including all the absorption signal, noise, and the like for each of the gas types (A) to (D). By performing the lock-in processing (multiplication of the reference signal and low-pass filter processing) on this signal, the envelope can be extracted with high sensitivity even for a signal including noise.

The control unit 70 performs gas concentration calculation processing by the lock-in processing on the output continuous signal. In the gas concentration calculation processing, the filter signals 401a to 401d are multiplied by the reference signal by multipliers 71a to 71d, and pass through digital LPFs 72a to 72d, so that each signal component leaving a DC component including the absorption signal of each gas type is output. As the noise components of the filter signals 401a to 401d are removed by the digital LPFs 72a to 72d, the control unit 70 can acquire a signal component with a good signal-to-noise ratio (SNR).

Here, each signal component output after the lock-in processing includes disturbance factors such as temperature change, pressure change, and light source fluctuations at each time. By comparing a signal level of the signal component of the continuous signal derived from the gas filters 21b to 21d set as measurement component gas sealing filters with a signal level of the signal component of the continuous signal derived from the gas filter 21a set as the zero gas sealing filter, it is possible to remove noise at each time due to the disturbance component.

The gas concentration of each signal component having passed through the control unit 70 is calculated based on a principle formula of a gas filter correlation method according to Formula 1. Formula 1 is an example of the principle formula of the gas filter correlation method when the measurement component gas is CO.
[Mathematical Formula 1]

Formula 1

$$CO\ Gas\ Concentration \propto \frac{V_{N_2} - V_{CO}}{V_{CO}}$$

Here, a light beam that has passed through an $N_2$ filter includes absorption by the measurement target gases in the gas filter, and a signal that has passed through the filter sealed with the measurement target gases ideally absorbs all the absorption by the measurement target gases in the filter. Therefore, the signal is output regardless of the concentration of the measurement target gases present inside a subsequent gas cell. That is, a difference between the signal levels of the signals having passed through the gas filters of the measurement target gases + the sample gas cell 40 is obtained from the signal level of the signal having passed through $N_2$ gas filter + the sample gas cell 40, so that the noise components common to both paths can be removed.

The value calculated by Formula 1 is proportional to the gas concentration according to the Beer-Lambert law. Gas concentration indication values of the respective gas types (A) to (D) can be calculated by performing zero-span calibration by a predetermined method.

In the present embodiment, even when the gas filter correlation is adopted, it is not necessary to construct the gas filters 21a to 21d sealed with gases and the gas filter wheel 20 that rotates side by side. Therefore, the size of the entire gas analyzer 100 can be reduced, and the light beam transmitted through the gas filters 21a to 21d is synchronized with the time information. Therefore, even when the number of gas types increases to a plurality of types, it is possible to cope with the increase only by increasing the number of the gas filters 21a to 21d, and the problem that the size of the gas filter wheel 20 increases is solved. Therefore, the gas analysis in which only concentration of one type of gas can be calculated in the related art can be used for analysis of two or more types of gases. Therefore, a desired number of gases can be analyzed only by changing the number of the gas filters 21a to 21d, and a plurality of types of gases can be analyzed simultaneously.

As described above, according to the above embodiment, the lock-in processing is executed by the control unit 70, but the present invention is not limited thereto. For example, the lock-in processing may be executed by a general-purpose PC (not illustrated) connected to the gas analyzer 100. As a result, the configuration of the control unit 70 of the gas analyzer 100 can be simplified, and the cost can be reduced.

The embodiment of the present invention is not limited to the above embodiment, and various changes, substitutions, and modifications may be made without departing from the spirit of the technical idea of the present invention. Further, when the technical idea of the present invention may be implemented in another method by the progress of the technology or another derived technology, the technical idea may be carried out by using the method. Therefore, the claims cover all implementations that may be included within the scope of the technical idea of the present invention.

EP 4 563 976 A1

The present application is based on Japanese Patent Application No. 2023-031563 filed on March 2, 2023. All the contents are included herein.

Reference Signs List

10 Light emitting unit
20 Gas filter wheel
21a to 21d Gas filter
25a to 25d Position detection unit
26 Photodetector
30 Rotation mechanism
40 Sample gas cell
50 Light receiving unit
51 Digital input terminal
60 Signal processing device
70 Control unit
71a to 71d Multiplier
72a to 72d Digital LPF
80 Storage unit
100 Gas analyzer
200 Electric circuit
201 Light receiving unit PD
202 IV conversion unit
203 Amplifier circuit
204 low-pass filter
205 band-pass filter
206 AD conversion unit
300 Continuous signal
301a to 301d Signal
401a to 401d Filter signal

Claims

1.  A gas analyzer (100) comprising:

    a light source configured to emit an infrared light beam;
    a plurality of gas filters (21a to 21d) configured to transmit a light beam from the light source and sealed with a plurality of measurement target gases of high purity and one gas that does not absorb infrared light;
    a gas filter wheel (20) in which the plurality of gas filters (21a to 21d) are stored and which has a rotation mechanism (30);
    a sample gas cell (40) on which the light beam transmitted through the gas filters (21a to 21d) is incident and through which a gas including the measurement target gases flows; and
    a light receiving unit (50) configured to receive the infrared light beam transmitted through the sample gas cell (40).

2.  The gas analyzer (100) of a gas filter correlation (GFC) according to claim 1, further comprising:

    a signal processing device (60) configured to convert the infrared light received by the light receiving unit (50) into an electric signal and calculate a gas concentration;
    position detection units (25a to 25d) configured to detect positions of the plurality of gas filters (21a to 21d) in synchronization with rotation of the gas filter wheel (20); and
    a control unit (70), wherein
    the control unit (70)
    synchronizes the detected positions of the gas filters (21a to 21d) with time information of the light beam transmitted through the gas filters (21a to 21d), and

performs gas concentration calculation processing for each of the gas filters (21a to 21d).

3. The gas analyzer (100) according to claim 2, further comprising:

a photodetector (26) configured to detect positions of the position detection units (25a to 25d), wherein the position detection units (25a to 25d) are formed by a different number of holes for each position of the gas filters (21a to 21d).

4. The gas analyzer (100) according to claim 2, further comprising:

a magnetic detection element configured to detect positions of the position detection units (25a to 25d), wherein the position detection units (25a to 25d) are formed of magnets that emit different magnetism for each position of the gas filters (21a to 21d).

5. The gas analyzer (100) according to any one of claims 2 to 4, wherein

the control unit (70)
performs signal processing of separating a synchronization signal by taking AND of a reference signal and a gate signal, and further joining the separated synchronization signals to arrange into a continuous signal (300), and performs the gas concentration calculation processing by lock-in processing on the continuous signal (300).

6. The gas analyzer (100) according to claim 5, wherein the control unit (70) compares a signal level of a signal component of the continuous signal (300) of the gas filters (21a to 21d) sealed with the measurement target gases with a signal level of a signal component of the continuous signal (300) of the gas filter sealed with a reference gas, and calculates each gas concentration indication value of the measurement target gases based on a principle formula of a predetermined gas filter correlation method.

FIG. 1

100

GAS ANALYZER

70
CONTROL UNIT

80
STORAGE UNIT

25d 21d

30

25c
21c

60
SIGNAL PROCESSING DEVICE

51
DIGITAL INPUT TERMINAL

26

21a

25a

20

21b 25b

40
SAMPLE GAS CELL

50
LIGHT RECEIVING UNIT

10
LIGHT EMITTING UNIT

200
ELECTRIC CIRCUIT

# FIG. 2

FIG. 3

CO Gas Concentration $\propto \dfrac{V_{N_2} - V_{CO}}{V_{CO}}$

FIG. 4

FIG. 5

FIG. 6

FIG. 7

# EP 4 563 976 A1

## INTERNATIONAL SEARCH REPORT

International application No.

**PCT/JP2024/007550**

### A. CLASSIFICATION OF SUBJECT MATTER

*G01N 21/3518*(2014.01)i; *G01N 21/61*(2006.01)i
FI: G01N21/3518; G01N21/61

According to International Patent Classification (IPC) or to both national classification and IPC

### B. FIELDS SEARCHED

Minimum documentation searched (classification system followed by classification symbols)

G01N 21/00-21/61

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 56-34814 B2 (HONEYWELL INC.) 13 August 1981 (1981-08-13)<br>page 3, left column, line 34 to page 6, right column, line 18, fig. 1-3 | 1-6 |
| X | JP 10-82740 A (SHIMADZU CORPORATION) 31 March 1998 (1998-03-31)<br>paragraphs [0015]-[0024], fig. 1 | 1 |
| Y | | 1-6 |
| Y | JP 8-33349 B2 (SHIMADZU CORPORATION) 29 March 1996 (1996-03-29)<br>fig. 4 | 1-6 |
| A | JP 8-15128 A (HORIBA, LTD.) 19 January 1996 (1996-01-19)<br>paragraphs [0002]-[0004] | 1-6 |
| A | JP 1-35292 B2 (YAMATAKE HONEYWELL KK) 25 July 1989 (1989-07-25)<br>entire text, all drawings | 1-6 |
| A | JP 10-48135 A (SHIMADZU CORPORATION) 20 February 1998 (1998-02-20)<br>entire text, all drawings | 1-6 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 May 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

16

## INTERNATIONAL SEARCH REPORT

International application No.

**PCT/JP2024/007550**

**C.   DOCUMENTS CONSIDERED TO BE RELEVANT**

| Category* | Citation of document, with indication, where appropriate, of the relevant passages | Relevant to claim No. |
|---|---|---|
| A | JP 54-53579 A (FUJITSU LIMITED) 26 April 1979 (1979-04-26)<br>entire text, all drawings | 1-6 |
| A | EP 3163291 A1 (SICK AG) 03 May 2017 (2017-05-03)<br>entire text, all drawings | 1-6 |

Form PCT/ISA/210 (second sheet) (July 2022)

**INTERNATIONAL SEARCH REPORT**
Information on patent family members

International application No.

**PCT/JP2024/007550**

| Patent document cited in search report | | | Publication date (day/month/year) | Patent family member(s) | | | Publication date (day/month/year) |
|---|---|---|---|---|---|---|---|
| JP | 56-34814 | B2 | 13 August 1981 | US | 3904880 | A | |
| | | | | column 4, line 8 to column 9, line 22, fig. 1-3 | | | |
| JP | 10-82740 | A | 31 March 1998 | US | 5894128 | A | |
| | | | | column 3, line 11 to column 4, line 65, fig. 1 | | | |
| JP | 8-33349 | B2 | 29 March 1996 | (Family: none) | | | |
| JP | 8-15128 | A | 19 January 1996 | (Family: none) | | | |
| JP | 1-35292 | B2 | 25 July 1989 | (Family: none) | | | |
| JP | 10-48135 | A | 20 February 1998 | (Family: none) | | | |
| JP | 54-53579 | A | 26 April 1979 | (Family: none) | | | |
| EP | 3163291 | A1 | 03 May 2017 | CN | 108152242 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4790330 B

- JP 2023031563 A